# EUROPEAN PATENT SPECIFICATION

(11) **EP 1 867 528 B1**
(45) Date of publication and mention of the grant of the patent: **07.05.2014**
(21) Application number: 07109546.7
(22) Date of filing: 04.06.2007
(51) Int. Cl.: B60R 21/231, B60R 21/207, B60R 21/217, B60R 21/237

(54) **Side airbag, side airbag apparatus, and motor vehicle seat**
Seitenairbag, Seitenairbagvorrichtung und Motorfahrzeugsitz
Airbag latéral, appareil avec airbag latéral et siège de véhicule à moteur

(30) Priority: 12.06.2006 JP 2006161745; 12.06.2006 JP 2006161746; 12.06.2006 JP 2006161747; 10.05.2007 JP 2007125458
(43) Date of publication of application: 19.12.2007
(73) Proprietor: TAKATA CORPORATION, Minato-ku, Tokyo 106-8510 (JP)
(72) Inventor: Kashiwagi, Daisuke c/o Takata Corporation, Tokyo 106-8510 (JP)
(74) Representative: Vossius & Partner

(56) References cited:
- EP-A- 1 273 486
- EP-A1- 0 897 837
- DE-U1- 20 307 535
- JP-A- 2003 335 210
- JP-A- 2004 203 272
- US-A1- 2002 158 451

## Description

The present invention relates to a side airbag, a side airbag apparatus, and a motor vehicle seat for restraining a body of an occupant when in occurrence of a side collision or the like of a motor vehicle such as an automobile or the like.

A side airbag apparatus is known for restraining an occupant's body by inflating a side airbag toward a side portion of the occupant by means of an inflator, when in occurrence of a side collision, a rollover or the like of a motor vehicle such as an automobile. The side airbag apparatus is housed in, for example, a casing that is housed in a seat back portion of a seat in a folded back condition. The side airbag is inflated and deployed into a space between the occupant and a side wall portion of the vehicle body from the seat back portion by means of the gas blown out of the inflator when in occurrence of the side collision or the like (for example Figs. 9 and 10 of JP-2003-335210 A (Patent Document 1)).

As for the way how to fold back the side airbag in the housing, for example, a so-called inward-folding, in which an outer edge portion of a bag at a tip end side of the inflating direction is folded toward an inside (for example, the Patent Document 1), a so-called roll-folding in which the bag is folded while rounding in a roll shape, or the like are known (for example, JP-2004-203272 A (Patent Document 2)).

DE 2003 07 535 U1 relates to a side air-bag mounted to the back-rest of a vehicle seat. According to embodiments comprising an airbag with two airbag chambers, the two airbags are arranged so as to inflate inside each other or two separate airbags are arranged so as to inflate adjacent to one another. Further embodiments relate to an airbag device comprising a single airbag sub-divided into a pair of separate inflatable chambers. The second chamber is located in front of the first chamber relative to the back-rest, with the first chamber placed between the inflator and the second chamber.

EP 0 897 837 A1 relates to an impact protection arrangement including a trough-shaped housing in which an inflating device and the folded-together air bag are housed. A narrow elongated storage shape of the airbag is achieved by bringing the airbag into its folded-together position by combined turning and rolling foldings. In its folded-together position, the air bag is held by a surrounding protective cover envelope.

US 2002/158451 A1 discloses an inflatable side gas bag for a vehicle occupant restraint system. The side gas bag comprises an upper edge by means of which it can be fastened in a housing. The side gas bag has an upper portion adjacent to the upper edge and a lower portion remote from the upper edge. In a non-inflated condition, the upper portion of the side gas bag is zigzag-folded and the lower portion is rolled up. During inflation the side gas bag expands by the gas flowing first into the zigzag folded portion and subsequently into the rolled up portion 26.

In the aforementioned hitherto known technology, a basic construction of a side airbag apparatus is disclosed in which a side airbag is housed in a seat back portion of a vehicle seat and is deployed into a space between an occupant and a side wall portion of the vehicle body in an emergency. In the side airbag apparatus having such a construction, in light of that the airbag is housed in a seat, and that the airbag is inflated and deployed at the space between the occupant (or the seat) and the vehicle body, a compact housing property and a stable deploying capability are required.

An object of the present invention is to provide a side airbag, a side airbag apparatus, and a motor vehicle seat, capable of improving the housing property and the deploying capability. This object is achieved with the features of the claims.

To achieve the above-describe object, the first aspect is characterized in that a side airbag inflated and deployed in a space between a side wall portion of a vehicle body and an occupant seated on a seat disposed inside the vehicle body includes an accordion-like folded portion being folded back into an accordion-like shape when being housed, and a roll-shaped folded portion being folded back into a roll shape when being housed.

The side airbag is housed in, for example, a seat back portion of the seat while being folded back, and is inflated and deployed in a space between the occupant and a side wall portion of the vehicle body from the seat back portion of the seat by means of gas blown out from an inflator when in occurrence of a side collision, a rollover, or the like of a motor vehicle.

In a folding back method for the airbag, there are methods of folding back into an accordion-like shape, or a roll-shape. In general, there is a tendency in which in a case where the airbag is folded back into the accordion-like shape and housed, a deploying speed is relatively high, and in a case where the bag is folded back into the roll-shape and housed, it is difficult to receive influence of an obstacle.

In the first aspect of the present invention, the side airbag is provided with the accordion-like folded portion that is folded back into the accordion-like shape when being housed, and the roll-shaped folded portion that is folded back into the roll-shape when being housed. Thereby, it becomes possible to house the side airbag in a condition of folding back the base end side in the inflating direction into the accordion-like shape, and folding back the tip end side in the inflating direction into the roll shape. Consequently, a deploying speed of the airbag can be increased at the base end side in the inflating direction because the side airbag is folded back into the accordion-like shape at the base end side in the inflating direction where an obstacle such as an arm or the like of the occupant does not exist. Further, it is possible to hardly receive an influence of the obstacle at the tip end side in the inflating direction because the side airbag is folded back into the roll shape at the tip end side in the inflating direction where a possibility that the obstacle such as the arm or the like of the occupant exists. In a manner as described above, since both an improvement of the deploying speed and suppression for the influence of the obstacle can be satisfied, a deploying property of the airbag can be improved. Further, by that the side airbag is provided with the accordion-like folded portion and the roll-shaped folded portion, the side airbag can be folded back into a fully compact size when being housed. Accordingly, a housing property can be improved.

Furthermore, according to the first aspect of the invention, an inside of the side airbag is partitioned into a first chamber and a second chamber, and the side airbag has a first bag portion including the first chamber for receiving a chest portion of the occupant, and a second bag portion including the second chamber for limiting a movement of a waist portion of the occupant.

Thereby, when in occurrence of the side collision, a rollover or the like of the motor vehicle, a shock can be absorbed by receiving the chest portion of the occupant bymeans of the first bag portion, and the movement of the waist portion of the occupant in the side direction of the vehicle body can be limited by means of the second bag portion. This results in improving the safety.

Furthermore, according to the first aspect of the invention, the first bag portion and the second bag portion are connected at the base end side in the inflating direction.

Thereby, a flip-flopping of the airbag when in inflation and deployment can be suppressed in comparison to the airbag having a construction, in which, for example, a plurality of bag portions are separated.

According to a second aspect of the invention, the accordion-like folded portion is provided at a base end side in an inflating direction, and the roll-shaped folded portion is provided at a tip end side in the inflating direction.

Thereby, the airbag can be housed in a condition where the base end side in the inflating direction is folded back into the accordion-like shape and the tip end side in the inflating direction is folded back into the roll shape. As a result, a deploying speed of the airbag can be increased at the base end side in the inflating direction because the side airbag is folded back into the accordion-like shape at the base end side in the inflating direction where an obstacle such as an arm or the like of the occupant does not exist. Further, it is possible to hardly receive an influence of the obstacle at the tip end side in the inflating direction because the side airbag is folded back into the roll shape at the tip end side in the inflating direction where a possibility that the obstacle such as the arm or the like of the occupant exists. In a manner as described above, since both an improvement of the deploying speed and suppression for the influence of the obstacle can be satisfied, a deploying property of the airbag can be improved.

According to a third aspect of the invention, the side airbag includes an inward-folded portion where a bag outer edge portion at the tip end side in the inflating direction is tucked down in a manner so as to be pressed into inside of the bag.

In the third aspect of the present invention, the inward-folded portion is formed by that the bag outer edge portion at the tip end side in the inflating direction is tucked down in a manner so as to be pressed into inside of the bag. Thereby, it becomes possible to perform a folding back operation for the roll-shaped folded portion at the tip end side in the inflating direction, for example, in a condition where the bag outer edge portion at the tip end side in the inflating direction is formed into approximately flat shape. This results in improvement of a folding back property of the airbag. As a result, the airbag when being housed can be aimed at further compact sizing. Further, since the gas-flow path in the inward-folded portion is not narrowed by the folding back operation in general, a resistance is small. Furthermore, the inward-folded portion has a property in which the deploying speed at the time of inflation and deployment is high. Therefore, the airbag can be aimed at further compact sizing when being housed as mentioned above, while keeping a favorable deploying speed by performing the accordion-like folding and the roll-folding with performing the inward folding for the bag outer edge portion as in the present invention.

According to a fourth aspect of the invention, the side airbag includes a double folded-back portion where an end portion of the side airbag being folded back into approximately rod shape is folded back toward one side, and the folded-back portion is further folded back toward the other side, when being housed.

In the fourth aspect of the present invention, the base end side in the inflating direction of the side airbag is folded back into the accordion-like shape, and the tip end side in the inflating direction thereof is folded back into the roll shape. Thereby, the side airbag is folded back into approximately rod-shape. Thereafter, an end portion of the rod-shaped side airbag is folded back toward one side, and the folded-back portion is further folded back toward the other side, and then the side airbag is housed into an appropriate place in this condition. Thereby, a size in a length direction of the side airbag being folded back into approximately rod-shape can be reduced. Therefore, the airbag when being housed can be further small sized. The portion folded back toward one side is further folded back toward the other side. Thereby, the resistance of the side airbag when being inflated and deployed can be reduced in comparison to a case where the side airbag is continuously folded back toward one side (or the other side). Accordingly, while keeping a favorable deploying property, an improvement effect of the aforementioned housing property can be obtained.

According to a fifth aspect of the invention the side airbag includes a passing-through hole for an inflator supplying gas for inflating and deploying to be inserted into the inside of the bag, a first cover member disposed at one side of the passing-through hole, for covering the passing-through hole from an outside of the bag, and a second cover member disposed at the other side of the passing-through hole, for covering the passing-through hole from the outside of the bag.

In the fifth aspect of the present invention, a passing through hole is covered with a first cover member disposed at one side of the passing through hole from one side, after the inflator is inserted into the side airbag via the passing through hole, and the passing through hole is covered with a second cover member disposed at the other side of the passing through hole from the other side. Thus, by that the passing through hole is covered with the first and second cover members from both sides, a favorable airtightness of the side air bag can be kept.

According to a sixth aspect of the invention, a side airbag apparatus includes the side airbag according to any one of the aforementioned aspects of the invention, the inflator for supplying the gas for inflating and deploying the side airbag, and the casing for housing the side airbag and the inflator.

To achieve the aforementioned object, the ninth according to a seventh aspect of the invention, a motor vehicle includes the side airbag according to any one of the aforementioned aspects of the invention, and the inflator for supplying the gas for inflating and deploying the side airbag.

According to the present invention, a housing property and a deploying property of a side airbag can be improved.

Hereinbelow, an embodiment of the present invention will be explained with reference to the drawings.
Fig. 1 is a schematic side view illustrating an automobile seat provided with a side airbag apparatus of an embodiment according to the present invention;
Fig. 2 is a side view illustrating an entire structure in a condition where the side airbag of an embodiment according to the present invention is inflated and deployed, and a partially enlarged view in the vicinity of a chamber connecting portion;
Fig. 3 is a perspective view illustrating an entire structure of a sleeve provided in an inflator;
Fig. 4 is a perspective view illustrating an entire structure of a heat cloth;
Fig. 5 is a view explaining the way how to fold back the side airbag when the same is housed in a casing; and
Fig. 6 is a cross-sectional view illustrating the casing showing a condition where the folded-back side airbag is housed in the casing.

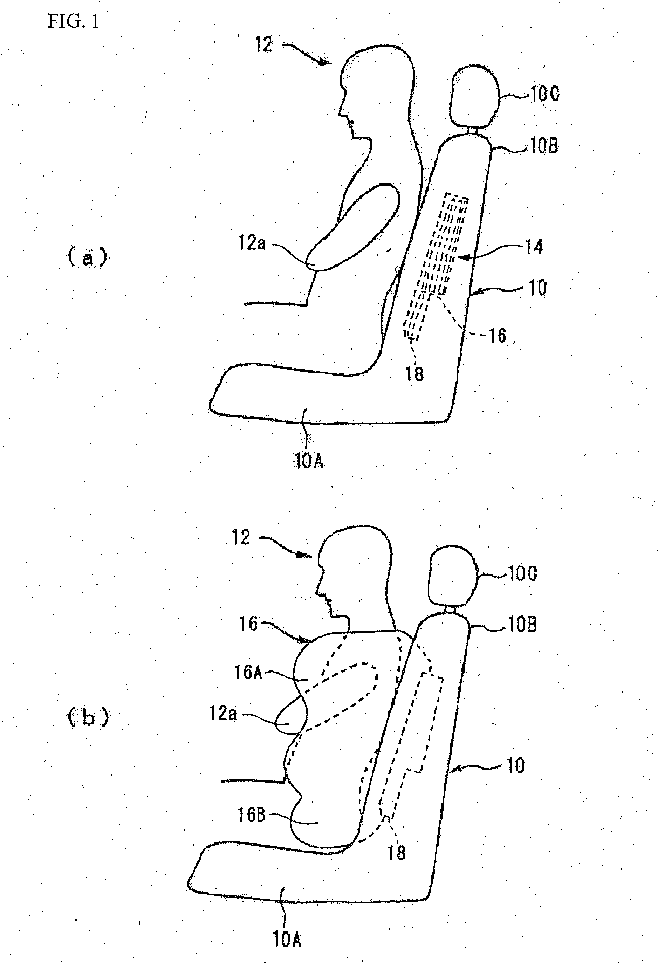

Fig. 1 is a schematic side view illustrating an automobile seat provided with the side airbag apparatus of an embodiment according to the present invention. Fig. 1(a) illustrates the side airbag apparatus in an ordinary time and Fig. 1(b) illustrates the side airbag apparatus in an inflated time.

In Fig. 1, an occupant 12 is seated on a seat 10. The seat 10 (motor vehicle seat) includes a seating portion 10A, and a seat back portion 10B is protruding upward from the seating portion 10A. A head rest 10C is attached at a top portion of the seat back portion 10B.

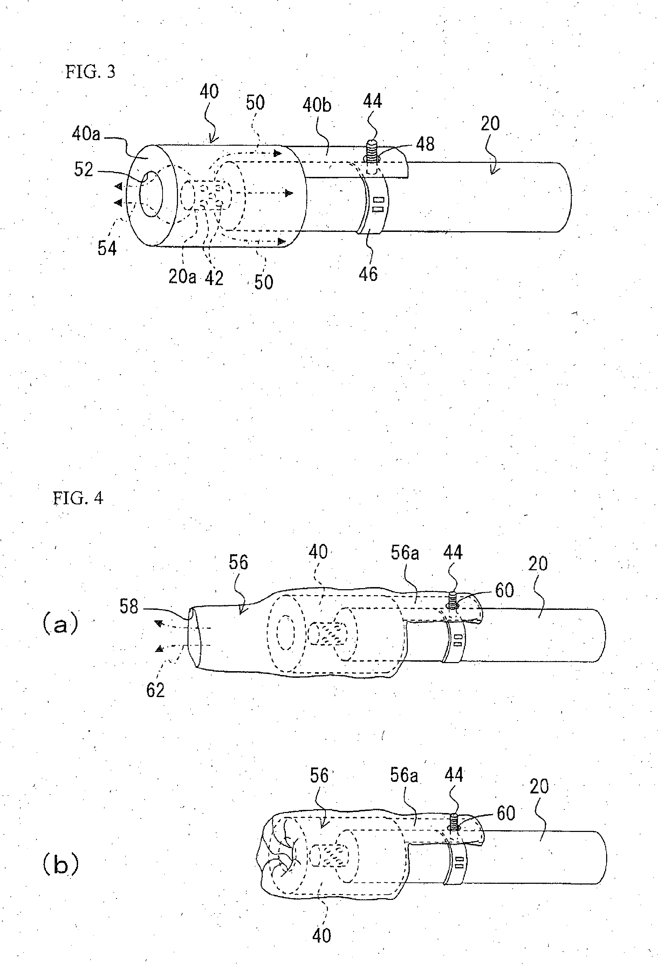

The seat 10 is provided with a side airbag apparatus 14 for limiting a movement of an upper body of the occupant 12 when in the side collision, the rollover or the like of the vehicle due to an accident, in the seat back portion 10B. The side airbag apparatus 14 is provided with a side airbag 16 inflating and deploying into a space between a side wall portion of the automobile body (not shown. positioned at a front side of the paper surface in Fig. 1) and the occupant 12 seated on the seat 10. The side airbag apparatus 14 is also provided with, for example, a resin-made casing 18 in which the side airbag 16 is housed in a folded condition. The side airbag apparatus 14 is further provided with an inflator 20 (refer to Fig. 3 or the like described later) for supplying the gas for inflating and deploying the side air bag 16. The inflator 20 is ignited by means of an inflator control circuit (not shown).

As shown in Fig. 1(a), in an ordinary time, the side airbag 16 is housed in a seat back portion 10B of the seat 10 in a condition of being folded back into the casing 18. On the other hand, for example, when in a side collision or the like of the automobile, the inflator 20 of the side airbag apparatus 14 is ignited by means of the aforementioned inflator control circuit (not shown). As shown in Fig. 1 (b), the side airbag 16 is expanded and protrudes from the seat 10 (while splitting off a stitch line, not shown, in a fabric on the front surface of the seat back portion 10B and a fabric on a side surface of the seat back portion 10B facing a vehicle body side wall portion in the present embodiment). The side airbag 16 is deployed into a space between the vehicle body side wall portion of the automobile and the occupant 12. Currently, the side airbag 16 is formed of a first bag portion 16A positioned upside, and a second bag portion 16B positioned downside. The first bag portion 16A receives a chest portion of the occupant 12 and absorbs a shock, and the second bag portion 16B limits a movement of a waist portion of the occupant 12 in the lateral direction of the vehicle.

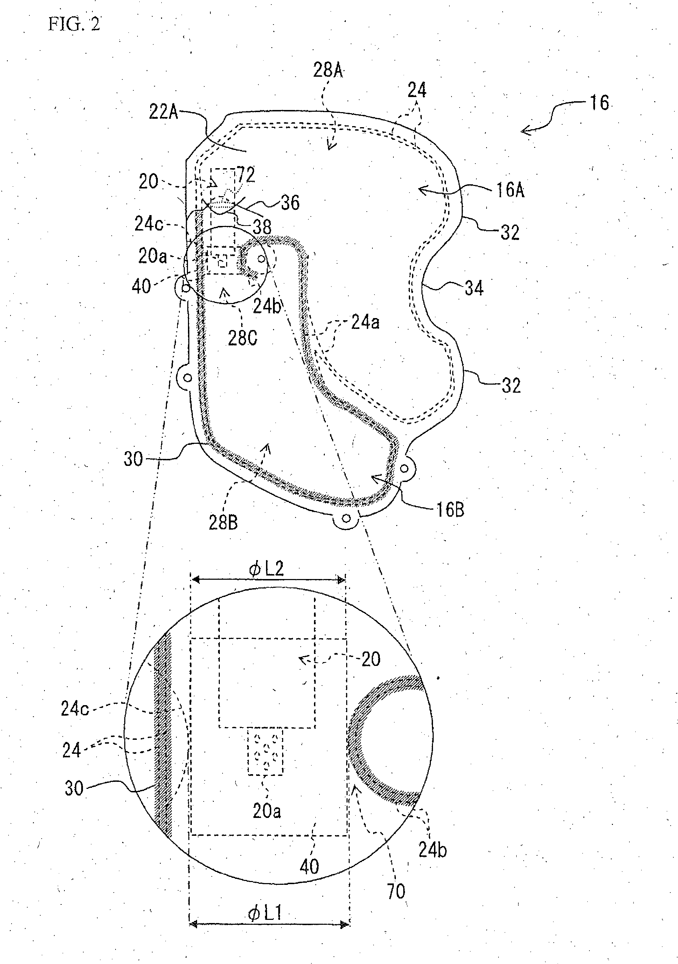

Fig. 2 is side view illustrating an entire structure of the side airbag 16 in an inflated and deployed condition, and showing a partially enlarged view in the vicinity of a chamber connecting portion as well.

In Fig. 2, the side airbag 16 is formed to be a bag-shaped body in which a first panel 22A and a second panel 22B (not shown in Fig. 2) formed into approximately the same shape are stitched and thereby joined along an entire periphery of an outer edge portion. A numeral 24 in Fig. 2 denotes the stitching-and-joining portion. The stitching-and-joining portions are stitched in a reduplicated manner entirely at a portion along the outer edge portion of the bag-shaped body. (Incidentally, it is not always necessary to be duplicated but also a single stitch may be applicable.) The first panel 22A is disposed at one side (for example, an occupant side) in a vehicle width direction, and the second panel 22B is disposed at the other side (for example, a side wall side of the vehicle body) in the vehicle width direction. Incidentally, Fig. 2 is a side view looking from one side in the vehicle width direction, and only the first panel 22A is illustrated.

An inside of the side airbag 16 is partitioned into two chambers including a first chamber 28A formed from an upside to a tip end side in an inflating direction (right side in Fig. 2), and a second chamber 28B formed from a base end side of the inflating direction (left side in Fig. 2) to a downside. The first chamber 28A and the second chamber 28B are partitioned by a stitching-and-joining portion 24a provided toward inner periphery side. However, the first chamber 28A and the second chamber 28B are connected at a chamber connecting portion 28C provided at the base end side of the inflating direction (left side in Fig. 2). The first chamber 28A and the second chamber 28B having been constructed as mentioned above is provided in the aforementioned first bag portion 16A and a second bag portion 16B, respectively.

The chamber connecting portion 28C is formed between a circular stitching portion 24b having approximately a circular shape, provided at a tip end portion of the stitching-and-joining portion 24a, and a circular stitching portion 24c having approximately a circular shape, provided at the base end side of the side airbag 16 (left side in Fig. 2). A sleeve 40 is fitted into a fitting portion 70, which is a portion where top portions of the respective circular stitching portions 24b and 24c are opposed (refer to a partially enlarged view in Fig. 2). Currently, the top portion of the circular stitching portion 24c at the fitting portion 70 side is provided to position inside (right side, and fitting portion 70 side in Fig. 2) of a sealing member portion 30 described later. Thereby, it is set so that an inner diameter L1 of the fitting portion 70 is approximately equal to an outer diameter L2 of the sleeve 40 (refer to the partially enlarged view in Fig. 2). Consequently, the sleeve 40 can be firmly attached to the fitting portion 70 by interference fit, and a good airtightness of a clearance between an outer peripheral surface of the sleeve 40 and an inner peripheral surface of the fitting portion 70 can be kept (In detailed terms, although a heat cloth 56, described later, intervenes between the outer peripheral surface of the sleeve 40 and the inner peripheral surface of the fitting portion 70, a thickness of the heat cloth 56 made of a base cloth is small, and therefore the description is omitted here.) Further, by providing a circular stitching portion at both sides (or one side may be applicable) of the fitting portion 70 as in the present embodiment, a construction can be formed to have an inner diameter of the circular stitching portion at the top portion to be approximately identical of the outer diameter of the sleeve 40. Thereby, the friction when inserted can be reduced and an attaching property of the sleeve 40 to the fitting portion can be improved in comparison to a case where a fitting portion is formed so that both sides thereof are stitched into a straight line shape, the inner diameter thereof is approximately identical of the outer diameter of the sleeve 40, and the sleeve 40 is inserted into the fitting portion.

The sleeve 40 inserted into the aforementioned fitting portion 70 is provided on the side of a convex portion 20a that discharges the gas of the inflator 20. The sleeve 40 is provided with a flowing amount distributing function for distributing the gas blown out from the convex portion 20a into the first and second chambers 28A and 28B at a predetermined flowing amount ratio (described later in detail).

In the stitching-and-joining portion 24, at a portion constituting an outer edge of the second chamber 28B (namely, a portion starting from a base end side of the chamber connecting portion 28C of the inflating direction to a tip end of the stitching-and-joining portion 24a which extends toward an inner periphery side, while running the downside of the side airbag 16), a sealing member portion 30 formed from an appropriate sealing material such as silicone rubber or the like is provided along the stitching-and-joining portion 24 so as to seal the stitching-and-joining portion 24. The sealing member portion 30 is provided to have a wider width than the reduplicated stitching-and joining portions 24 so that both the stitching-and-joining portions 24 provided in the reduplicated manner can be sealed (refer to the partially enlarged view in Fig. 2). Thereby, the airtightness of the second bag portion 16B having the second chamber 28B can be improved, and the pressure in the second bag portion 16B for limiting the movement of the waist portion of the occupant 12 can be kept at relatively high pressure for relatively long time.

The side airbag 16 (in detailed terms, the first bag 16A) is provided with a concave portion 34 having approximately arc shape at a position corresponding to an elbow portion 12a of the occupant 12 (refer to Fig. 1), at a bag outer edge portion 32 at a tip end side of the inflating direction thereof (right side in Fig. 2). The concave portion 34 is formed by forming a bag shape while stitching and joining the first and second panels 22A and 22B being previously cut out so that a concave portion is formed at a position corresponding to the outer edge portion.

Incidentally, in the first panel 22A, a slit (passing-through hole) 72 is provided for inserting the inflator 20 and the sleeve 40 into the side airbag 16. In addition, a cover member (first cover member) 36 for covering the slit 72 from one side (downside in Fig. 2), and a cover member (second cover member) 38 for covering the slit 72 from the other side (upside in Fig. 2) are respectively provided. These cover members 36 and 38 are constructed with part of appropriate filler cloth that is integrally provided by stitching work at a front face of the first panel 22A. The airtightness of the side airbag 16 can be improved by covering the slit 72 upon folding back the covering members 36 and 38, after inserting the inflator 20 and the sleeve 40 through the aforementioned slit 72.

Fig. 3 is a perspective view illustrating an entire structure of the aforementioned sleeve 40 that is provided in the inflator 20.

In Fig. 3, the sleeve 40 is a cylinder member having a squeezing portion 40a at one side (left side in Fig. 3, i.e., the second chamber 28B side), and a tongue piece portion 40b for hooking the sleeve 40 on the inflator 20, at the other side (right side in Fig. 3, i.e., first chamber 28A side). On the other hand, the inflator 20 has the convex portion 20a at one side thereof (left side in Fig. 3, i.e., the second chamber 28B side). A plurality of blowing-out holes 42 for blowing out the gas are provided in the convex portion 20a. The inflator 20 is supported by a clip 46 having a bolt 44, and the inflator 20 is fixed to the casing 18 by fastening the bolt 44 on the casing 18.

In the tongue piece portion 40b of the sleeve 40, a hole 48 is provided for the bolt 44 of the clip 46 to be inserted. By that the bolt 44 is inserted into the hole 48, the sleeve 40 is hooked in a condition of covering one side (left side in Fig. 3, i.e., the second chamber 28B side) of the inflator 20. Incidentally, an inner diameter of the sleeve 40 is formed to be greater than an outer diameter of the inflator 20. A clearance of a flow path (indicated by an arrow 50 in Fig. 3) where the blown out gas flows toward a first chamber 28A side is secured between an inner peripheral surface of the sleeve 40 and an outer peripheral surface of the inflator 20.

Further, an opening 52 is provided in the squeezing portion 40a of the sleeve 40. A bore diameter of the opening 52 is set to a previously calculated appropriate value so as for the blown out gas of the inflator 20 to be distributed to the first chamber 28A of the first bag portion 16A and the second chamber 28B of the second bag 16B at an appropriate flowing amount ratio. This is for the first bag portion 16A and the second bag portion 16B constituting the side airbag 16 to perform a desired deploying behavior, or for the pressures in the first bag portion 16A and the second bag portion 16B to become desired values, respectively. Thereby, the gas blown out from the inflator 20 is controlled to a predetermined flowing amount that is previously set, and supplied to the second chamber 28B side. (The flow path is indicated by an arrow 54 in Fig. 3.)

The sleeve 40 having the aforementioned construction is attached to the chamber connecting portion 28C in a condition of being covered with the heat cloth 56. Fig. 4 is a perspective view illustrating an entire structure of the heat cloth 56, in which Fig. 4(a) illustrates a condition in a halfway of inflation and deployment of the side airbag 16, and which Fig. 4(b) illustrates a condition after completion of the inflation and deployment.

In Fig. 4, the heat cloth 56 is a cylindrical base cloth having an opening 58 at one side (left side in Fig. 4, i.e., the second chamber 28B side), and a tongue piece portion 56a for hooking the heat cloth 56 on the inflator 20 at the other side (right side in Fig. 4, i.e., the first chamber 28A side). A length of the heat cloth 56 in a cylinder axis direction is configured to be longer than that of the sleeve 40. A hole 60 for the bolt 44 of the clip 46 to be passed through is provided in the tongue piece portion 56a. By that the bolt 44 is passed through the hole 60, the heat cloth 56 is hooked on one side of the inflator 20 (left side in Fig. 4, i.e., the second chamber 28B side) in a condition of covering the sleeve 40.

As shown in Fig. 4(a), in a halfway of inflation and deployment of the side airbag 16, the heat cloth 56 is brought to a fully stretched condition by the gas blown out from the inflator 20 via the opening 52 of the sleeve 40. The gas is supplied into the second chamber 28B from the opening 58 at a tip end of one side of the heat cloth 56 as indicated by an arrow 62 in Fig. 4(a). Thereby, the high temperature gas blown out from the inflator 20 toward the chamber 28B side is suppressed to blow out from the opening 52 of the squeezing portion 40a of the sleeve 40 to a surrounding area and to directly collide with the first and second panels 22A and 22B. This reduces a deterioration of the base cloth and stitches due to the high temperature gas.

Fig. 4(b) illustrates a condition after the inflation and deployment of the side airbag 16 is complete. In general, the pressure of a portion for limiting the waist portion is set to be greater than that of a portion of the chest portion in a side airbag having a plurality of portions for respectively restraining a chest portion and a waist portion of an occupant as in the present embodiment in the light of improvement of safety. Accordingly, it is preferable to prevent the gas from blowing back to the chest portion side from the waist portion side after completing the inflation and deployment of the airbag. In the present embodiment, when the gas is trying to blow back from the second chamber 28B side to the first chamber 28A side via the chamber connecting portion 28C after the inflation and deployment of the side airbag 16 is completed, the opening 52 of the sleeve 40 is obstructed by that the heat cloth 56 is folded back, as shown in Fig. 4(b). Thereby, the gas is suppressed to blow back from the second chamber 28B to the first chamber 28A and the pressure in the second bag portion 16B can be kept at relatively high pressure for relatively long time.

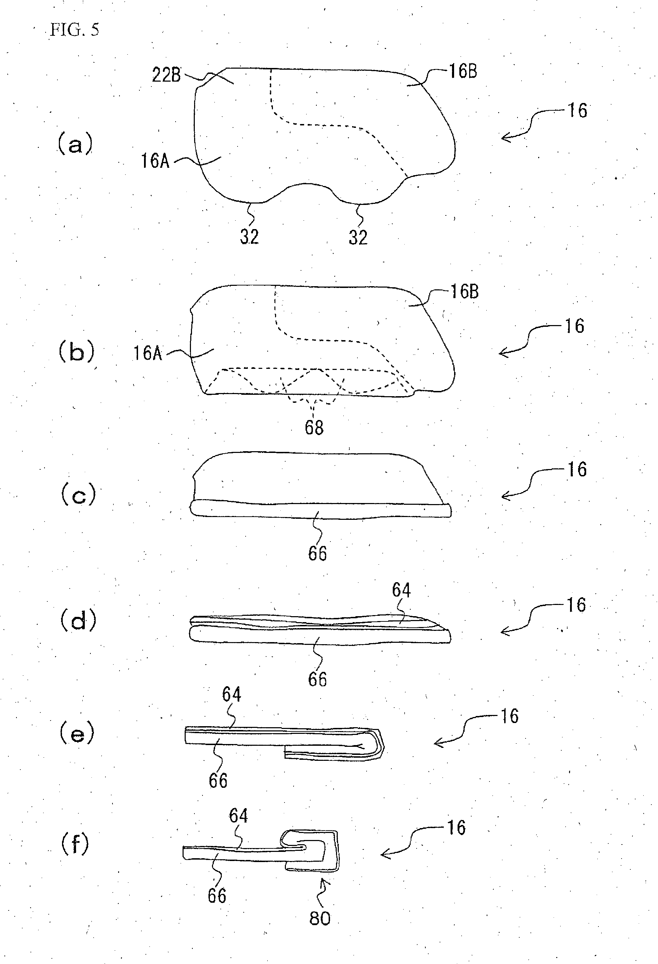

Fig. 5 is a view explaining the way how to fold back the side airbag 16 when being housed in the casing 18, described earlier. Incidentally, a condition of the side airbag 16 looking from the second panel 22B side is shown here.

Firstly, a so-called "inward folding" is performed in which the above-described bag outer edge portion 32 at a tip end side of the inflating direction (downside in Fig. 5) is folded toward an inside in a manner so as to tuck down into a space between the first panel 22A and the second panel 22B, from a condition that the side bag 16 is flatly spread (a condition shown in Fig. 5(a)). Thereby, an inward-folded portion 68 is formed as shown in the drawings. Incidentally, in the present embodiment, the inward folding is performed only for the first bag portion 16A. By performing the inward folding, the tip end side of the inflating direction (downside in Fig. 5) of the side airbag 16 is formed to be approximately flat shape (a condition shown in Fig. 5(b)). Then, a so-called "roll-folding" is performed in which the side airbag 16 is tucked down while being rolled up into a roll shape from the tip end side (downside in Fig. 5) toward a base end side (upside in Fig. 5) of the inflating direction of the approximately flatly shaped side airbag 16 (a condition shown in Fig. 5(c)). Thereby, a roll-shaped folded portion 66 is formed as shown in the drawing. A diameter of the roll and a number of times of performing the roll-folding at this moment are approximately set corresponding to a size of the airbag, a size of the casing where the airbag is housed, or the like. However, in the present embodiment, for example, a first roll width is set to be 23 mm, and a number of folding times is set to be 3 times.

Next, as for the rest part of the base end side of the side airbag 16 in the inflating direction (upside in Fig. 5), a so-called "accordion-fold" is performed in which the rest part of the base end side of the side airbag 16 is tucked down in an accordion-like manner by alternatively performing a mountain-fold and a valley-fold. Thereby, an accordion-like folded portion 64 is formed as shown in the drawing. As a result, the side airbag 16 is folded back into a rod-shape (a condition shown in Fig. 5(d)). Thereafter, the rod-shaped side airbag 16 is folded back toward one side (downside in the drawing here) so as to reduce a size in a length direction (a condition shown in Fig. 5(e)), and further, the folded-back portion is entirely folded back toward the other side (upside in the drawing here). Thereby, a double folded-back portion 80 is formed (a condition shown in Fig. 5(f)). In this condition, the side airbag 16 is housed in the casing 18.

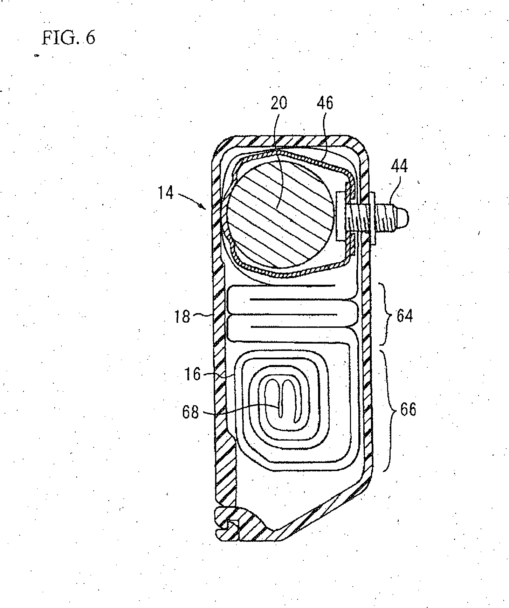

Fig. 6 is a cross-sectional view showing a case 18 illustrating a condition in which the side airbag 16 being folded back in a manner as described above is housed in the casing 18.

As shown in Fig. 6, by that the bolt 44 provided in the above-described clip 46 is fastened to the casing 18, the inflator 20 is fixed to the casing 18. Further, an end portion of the base end side of the inflating direction of the side airbag 16 (upside in Fig. 6) is fixed by being sandwiched between the clip 46 and the casing 18. Furthermore, as described above, the side airbag 16 is provided with the accordion-like folded portion 64, which is folded back in the accordion-like folding at the base end side in the inflating direction, the roll-shaped folded portion 66 which is folded back in the roll-folding at the tip end side in the inflating direction (downside in Fig. 6), and the inward-folded portion 68 at the tip end side in the inflating direction in which the bag outer edge portion 32 at the tip end side in the inflating direction is tucked down in a manner so as to be pressed into inside of the bag. In thus described condition, the side airbag 16 is housed in the casing 18.

In the automobile where the side airbag apparatus 14 having the construction described above is mounted, various types of sensors are provided for detecting the occurrence (or prediction for the occurrence) of the collision (including the side collision or the like) of the automobile or the rollover thereof, when the same occurs. Moreover, when in an emergency of the side collision or the like, these sensors detect the emergency, and an inflator control circuit starts up an initiator of an inflator 12 on the basis of a detecting signal from these sensors. Thereby, the inflator 20 is started up and the gas for inflating the airbag is blown out. The side airbag 16 is inflated and deployed in a space between the side wall portion of the automobile body and the occupant 12.

According to the side airbag apparatus 14 of the present embodiment having a construction and performing an operation explained above, a below mentioned advantage is obtained.

That is, in the present embodiment, the side airbag 16 is provided with the accordion-like folded portion 64, which is folded back in the accordion-like shape when being housed, at the base end side in the inflating direction, and is provided with the roll-shaped folded portion 66, which is folded back in the roll-shape when being housed, at the tip end side in the inflating direction. Thereby, a deploying speed of the side airbag 16 can be increased since the side airbag 16 is folded into the accordion-like shape at the base end side in the inflating direction where an obstacle such as an arm or the like of the occupant 12 does not exist. In addition, it is hard to receive an influence of the obstacle such as the arm or the like of the occupant 12 since the side airbag 16 is folded into the roll shape at the tip end side in the inflating direction where there is a possibility that the obstacle exists. Thus, since both an improvement of the deploying speed and suppression for the influence of the obstacle can be satisfied, a deploying property of the side airbag 16 can be improved. Further, by that the side airbag 16 is provided with the accordion-like folded portion 64 and the roll-shaped folded portion 66, the side airbag 16 can be folded back into a fully compact size when being housed in the casing 18. Accordingly, a housing property can be improved.

Furthermore, the present embodiment is specifically constructed such that the inward folding is performed for the bag outer edge portion 32 at the tip end side in the inflating direction, and that the inward-folded portion 68 is provided at the tip end side in the inflating direction. Thereby, the roll-shaped folding back operation at the tip end side in the inflating direction can be performed in a condition where the bag outer edge portion 32 at the tip end side in the inflating direction is formed to be approximately flat shape. Accordingly, a folding back property of the side airbag 16 can be improved. As a result, the side airbag 16 can further be aimed at compact sizing when being housed. In addition, since the gas-flow path in the inward-folded portion 68 is not narrowed by the folding back operation in general, a resistance is small. Further, the inward-folded portion 68 has a property in which the deploying speed during inflation and deployment is high. Therefore, the airbag can be aimed at further compact sizing when being housed, while keeping a favorable deploying speed by performing the accordion-like folding and the roll-folding upon forming the bag outer edge portion 32 into the inward folding as in the present embodiment.

Furthermore, the present embodiment is specifically constructed such that the base end side in the inflating direction of the side airbag 16 is folded back into the accordion-like shape, and the tip end side in the inflating direction thereof is folded back into the roll shape. Thereby, the side airbag 16 is folded back into approximately rod-shape. Thereafter, an end portion of the rod-shaped side airbag 16 is folded back toward one side, and the folded-back portion is further folded back toward the other side. Thereby, a double folded-back portion 80 is formed. Thereby, a size in a length direction of the side airbag 16 being folded back into approximately rod-shape can be reduced. Therefore, the side airbag 16 when being housed can be aimed at further small sizing. The portion folded back toward one side is further folded back toward the other side. Thereby, the resistance of the side airbag 16 when being inflated and deployed can be reduced in comparison to a case where the side airbag 16 is continuously folded back toward one side (or the other side). Accordingly, while keeping a favorable deploying property, the airbag can be aimed at further compact sizing when being housed as mentioned above.

Furthermore, the present embodiment is specifically constructed such that an inside of the side airbag 16 is partitioned into the first chamber 28A and the second chamber 28B. Further, the present embodiment is constructed such that the side airbag 16 is provided with the first bag portion 16A having the first chamber 28A for receiving the chest portion of the occupant 12, and the second bag portion 16B having the second chamber 28B for limiting the movement of the waist portion of the occupant 12. Thereby, when in occurrence of the side collision, the rollover or the like of the motor vehicle, a shock can be absorbed by receiving the chest portion of the occupant 12 by means of the first bag portion 16A, and the movement of the waist portion of the occupant 12 in the side direction of the vehicle body can be limited by means of the second bag portion 16B. This results in improving the safety.

Moreover, the present embodiment is specifically constructed such that the first bag portion 16A and the second bag portion 16B are connected at the base end side in the inflating direction. Thereby, a flip-flopping of the airbag when in inflation and deployment can be suppressed in comparison to the airbag having a construction, in which, for example, a plurality of bag portions are separated.

Further, the present embodiment is specifically constructed such that the slit 72 for inserting the inflator 20 that supplies the gas for inflation and deployment, into the inside of the bag is provided in the first panel 22A, and that the cover member 36 for covering the slit 72 from outside the bag, which is disposed at a downside of the slit 72, and a cover member 38 for covering the slit 72 from outside the bag, which is disposed at an upside of the slit 72 are provided in the first panel 22A. Thereby, the slit 72 is covered with the cover member 36, which is disposed at the downside of the slit 72, from the downside, and the slit 72 is covered with the cover member 38, which is disposed at the upside of the slit 72, from the upside, after the inflator 20 is inserted into the side airbag 16 via the slit 72. Thus, by that the slit 72 is covered with two of the cover members 36 and 38 from both sides, a favorable airtightness of the side air bag 16 can be kept.

Incidentally, in the above-described, although the side airbag, in which the inside of the airbag is constructed with two bag portions by being partitioned into two chambers, is explained above as an example, the present invention is not limited to the above-described. That is, for example, the present invention may be applied to a side airbag constructed as a single bag, in which an inside of the bag is not partitioned, or a side airbag constructed with three or more bag portions, in which an inside of the airbag is partitioned into three or more chambers.

Further, in the above-described, as mentioned above, although the side airbag 16 is constructed by stitching and joining the first panel 22A and the second panel 22B, the present invention is not limited to the above described. For example, the side airbag 16 may be constructed while joining the first panel 22A and the second panel 22B by other joining device such as, hollow weave or the like.

Furthermore, in the above-described, although a case is explained as an example in which the present invention is applied to a so-called seat-mount type side airbag apparatus that is mounted in the seat back 10B of the seat 10, the present invention is not limited to the above-described. For example, the present invention may be applied to, for example, a so-called door-mount type side airbag apparatus that is mounted on an automobile door.

## Claims

1. A side airbag inflated and deployed in a space between a side wall portion of a vehicle body and an occupant (12) seated on a seat (10) disposed inside the vehicle body,
wherein an inside of the side airbag (16) is partitioned into a first chamber (28A) and a second chamber (28B), and wherein the side airbag (16) has a first bag portion (16A) including the first chamber (28A) for receiving a chest portion of the occupant (12), and a second bag portion (16B) including the second chamber (28B) for limiting a movement of a waist portion of the occupant (12),
**characterized in that**
a roll-folding is provided towards a base end side and an accordion-fold is provided for the rest of the base end side of the airbag, where the first bag portion (16A) and second bag portion (16B) are connected in an inflation direction.

2. The side airbag according to Claim 1, including an accordion-like folded portion (64) at a base end side in an inflating direction, and a roll-shaped folded portion (66) at a tip end side (32) in the inflating direction.

3. The side airbag according to Claim 1 or 2, including an inward-folded portion (68) where a bag outer edge portion at the tip end side (32) in the inflating direction is tucked down in a manner so as to be pressed into inside of the bag (16).

4. The side airbag according to any one of Claims 1 through 3, including a double folded-back portion (80) where an end portion of the side airbag (16) being folded back into approximately rod-shape is folded back toward one side, and further folded back toward the other side, when being housed.

5. The side airbag according to any one of Claims 1 through 4, including a passing through hole (72) for an inflator (20) supplying gas for inflating and deploying to be inserted into the inside of the bag (16), a first cover member (36) disposed at one side of the passing through hole (72), for covering the passing through hole (72) from an outside of the bag (16), and a second cover member (38) disposed at the other side of the passing-through hole (72), for covering the passing-through (72) hole from the outside of the bag (16).

6. A side airbag apparatus comprising:
the side airbag (16) according to any one of Claims 1 through 5;
the inflator (20) supplying the gas for inflating and deploying the side airbag (16); and
the casing (18) for housing the side airbag (16) and the inflator (20).

7. A motor vehicle seat comprising:
the side airbag (16) according to any one of Claims 1 through 5; and
the inflator (20) supplying the gas for inflating and deploying the side airbag (16).

## Patentansprüche

1. Seitenairbag, der in einem Raum zwischen einem Seitenwandabschnitt einer Fahrzeug-Karosserie und einem Insassen (12) der auf einem innerhalb der Fahrzeug-Karosserie angeordneten Sitz (10) sitzt, aufgeblasen und entfaltet wird,
wobei ein Inneres des Airbags (16) in eine erste Kammer (28A) und eine zweite Kammer (28B) unterteilt ist, und wobei der Seitenairbag (16) einen die erste Kammer (28A) enthaltenden ersten Beutelabschnitt (16A) zum Aufnehmen eines Brustabschnitts des Insassen (12) und einen die zweite Kammer (28B) enthaltenden zweiten Beutelabschnitt (16B) zum Begrenzen einer Bewegung des Taillenabschnitts des Insassen (12) aufweist,
**dadurch gekennzeichnet, dass**
eine Roll-Faltung zu einer Basisendseite hin vorgesehen ist und eine Ziehharmonika-Faltung für den Rest der Basisendseite des Airbags vorgesehen ist, an der der erste Beutelabschnitt (16A) und der zweite Beutelabschnitt (16B) in einer Aufblasrichtung miteinander verbunden sind.

2. Seitenairbag nach Anspruch 1, mit einem Ziehharmonika-ähnlich gefalteten Abschnitt (64) an einer Basisendseite in einer Aufblasrichtung und einem rollenförmig gefalteten Abschnitt (66) an einer vorderen Endseite (32) in Aufblasrichtung.

3. Seitenairbag nach Anspruch 1 oder 2, der einen nach innen gefalteten Abschnitt (68) aufweist, wo ein Außenkantenabschnitt des Beutels an der vorderen Endseite (32) in Aufblasrichtung nach unten gesteckt ist, um in das Innere des Beutels (16) gedrückt zu werden.

4. Seitenairbag nach einem der Ansprüche 1 bis 3, der einen doppelt zurückgefalteten Abschnitt (80) aufweist, wo ein annähernd röhrenförmig zurückgefalteter Endabschnitt des Seitenairbags (16) zu einer Seite hin zurückgefaltet ist und zur anderen Seite hin weiter zurückgefaltet ist, wenn er untergebracht ist.

5. Seitenairbag nach einem der Ansprüche 1 bis 4, mit einem Durchgangsloch (72) für einen in das Innere des Airbags (16) einzusetzenden Gasgenerator (20), der Gas zum Aufblasen und Entfalten zuführt, einem an einer Seite des Durchgangslochs (72) angeordneten ersten Abdeckelement (36) zum Abdecken des Durchgangslochs (72) gegen eine Außenseite des Beutels (16) und einem an der anderen Seite des Durchgangslochs (72) angeordneten zweiten Abdeckelement (38) zum Abdecken des Durchgangslochs (72) gegen die Außenseite des Beutels (16).

6. Seitenairbag-Vorrichtung mit:
dem Seitenairbag (16) nach einem der Ansprüche 1 bis 5;
dem Gasgenerator (20), der das Gas zum Aufblasen und Entfalten des Seitenairbags (16) zuführt; und
dem Gehäuse (18) zum Unterbringen des Seitenairbags (16) und des Gasgenerators (20).

7. Kraftfahrzeugsitz mit:
dem Seitenairbag (16) nach einem der Ansprüche 1 bis 5; und
dem Gasgenerator (20), der das Gas zum Aufblasen und Entfalten des Seitenairbags (16) zuführt.

## Revendications

1. Coussin gonflable de sécurité latéral gonflé et déployé dans un espace entre une section de paroi latérale d'une caisse de véhicule et un passager (12) assis sur un siège (10) disposé à l'intérieur de la caisse du véhicule,
un intérieur du coussin gonflable de sécurité latéral (16) étant divisé entre une première chambre (28A) et une deuxième chambre (28B), et le coussin gonflable de sécurité latéral (16) ayant une première partie de coussin (16A) comprenant la première chambre (28A) pour la réception d'une partie du thorax du passager (12), et une deuxième partie de coussin (16B) comprenant la deuxième chambre (28B) pour la limitation d'un mouvement d'une partie de la taille du passager (12),
**caractérisé**
**en ce qu'**un repliage par enroulement est prévu vers un côté d'extrémité de base et un repliage en accordéon est prévu pour le reste du côté d'extrémité de base du coussin gonflable de sécurité, la première partie de coussin (16A) et la deuxième partie de coussin (16B) étant raccordées dans une direction de gonflage.

2. Coussin gonflable de sécurité latéral selon la revendication 1, comportant une partie repliée en accordéon (64) sur un côté d'extrémité de base dans une direction de gonflage, et une partie repliée en forme de rouleau (66) sur un côté d'extrémité de sommet (32) dans la direction de gonflage.

3. Coussin gonflable de sécurité latéral selon la revendication 1 ou la revendication 2, comportant une partie repliée vers l'intérieur (68) où une partie de bord extérieur sur le côté d'extrémité de sommet (32) dans la direction de gonflage est rabattue de manière à être serrée à l'intérieur du coussin (16).

4. Coussin gonflable de sécurité latéral selon l'une des revendications 1 à 3, comportant une partie à pli double (80) où une partie d'extrémité du coussin gonflable de sécurité latéral (16) pliée sensiblement en forme de boudin est repliée sur un côté, et où la partie repliée est ensuite rabattue sur l'autre côté quand elle est logée.

5. Coussin gonflable de sécurité latéral selon l'une des revendications 1 à 4, comportant un trou de passage (72) pour un générateur de gaz (20) refoulant un gaz pour le gonflage et le déploiement à introduire à l'intérieur du cousin (16), un premier élément de couverture (36) disposé sur un côté du trou de passage (72) pour recouvrir ledit trou de passage (72) depuis l'extérieur du coussin (16), et un deuxième élément de couverture (38) disposé sur l'autre côté du trou de passage (72) pour recouvrir ledit trou de passage (72) depuis l'extérieur du coussin (16).

6. Dispositif de coussin gonflable de sécurité latéral, comprenant :
le coussin gonflable de sécurité latéral (16) selon l'une des revendications 1 à 5 ;
le générateur de gaz (20) refoulant un gaz pour le gonflage et le déploiement du coussin gonflable de sécurité latéral (16) ; et
le boîtier (18) pour loger le coussin gonflable de sécurité latéral (16) et le générateur de gaz (20).

7. Siège de véhicule à moteur, comprenant :
le coussin gonflable de sécurité latéral (16) selon l'une des revendications 1 à 5 ; et
le générateur de gaz (20) refoulant le gaz pour le gonflage et le déploiement du coussin gonflable de sécurité latéral (16).
